# EUROPÄISCHE PATENTANMELDUNG

(11) **EP 4 677 974 A1**
(43) Veröffentlichungstag der Anmeldung: **14.01.2026**
(21) Anmeldenummer: 25186841.0
(22) Anmeldetag: 02.07.2025
(51) Int. Cl.: A01B 3/46

(54) **AUFSATTELDREHPFLUG**

(30) Priorität: 08.07.2024 DE 102024119271
(71) Anmelder: Lemken GmbH & Co KG, 46519 Alpen (DE)
(72) Erfinder: Wübbels, Benedikt, 46325 Borken (DE)

(57) **Zusammenfassung**

Die vorliegende Erfindung betrifft einen Aufsatteldrehpflug mit einer Zugeinrichtung zur lenkbaren Verbindung mit einer Zugmaschine, einem mehrere Pflugkörper tragenden Pflugrahmen, einer Drehvorrichtung zum Drehen des Pflugrahmens um mindestens eine, insbesondere radseitige, Drehachse aus einer Arbeitsstellung in eine andere Arbeitsstellung sowie in eine Transportstellung, wobei die Drehvorrichtung mit der Zugeinrichtung und dem Pflugrahmen verbunden ist, einem mit der Zugeinrichtung verbundenen Stabilisator, welcher sich im Wesentlichen entlang des Pflugrahmens erstreckt, einem Rad, welches an einem der Zugeinrichtung abgewandten Bereich, insbesondere Endbereich, des Stabilisators angeordnet ist, wobei das Rad zumindest über ein Schwenklager mit dem Stabilisator verbunden und um eine erste Lenkachse schwenkbar ist, wobei ein Verschwenken des Rades um die erste Lenkachse in Abhängigkeit einer Drehung des Pflugrahmens um die Drehachse erfolgt. Gemäß der Erfindung ist eine zweite Lenkachse, insbesondere in einem der Zugeinrichtung abgewandten Bereich des Stabilisators und/oder in Arbeitsrichtung hinter der ersten Lenkachse, vorgesehen, wobei das Rad um die erste Lenkachse und/oder die zweite Lenkachse schwenkbar ist.

## Beschreibung

Die vorliegende Erfindung betrifft einen Aufsatteldrehpflug zur Bodenbearbeitung.

Für die Bodenbearbeitung werden unterschiedliche landwirtschaftliche Geräte eingesetzt. Zum Lockern und Wenden des Bodens werden beispielsweise Pflüge eingesetzt, welche an einem Zugfahrzeug angebaut oder angehängt sein können, wobei letztere auch als Aufsattelpflüge bzw. Aufsatteldrehpflüge bezeichnet werden, bei denen ein Pflugrahmen mit daran angeordneten Pflugkörpern je nach Arbeitsrichtung hydraulisch gedreht werden kann. Im Gegensatz zu angebauten Pflügen weisen Aufsattelpflüge aufgrund ihrer großen Abmessungen und ihres höheren Gewichtes ein Fahrwerk auf, welches üblicherweise in Form eines Rades ausgebildet ist. Hierdurch kann ein Aufsatteldrehpflug beispielsweise bei einem Transport auf der Straße wie ein Anhänger hinter dem Zugfahrzeug gezogen und rangiert werden. Bei der Bodenbearbeitung ist das Fahrwerk bzw. Rad üblicherweise im Wesentlichen parallel zu einer sogenannten Anlage der Pflugkörper ausgerichtet, welche im Wesentlichen in eine Arbeitsrichtung des Pfluges ausgerichtet ist. Bei einer Änderung der Arbeitsrichtung und Drehung des Aufsatteldrehpfluges, beispielsweise im Vorgewende, muss das Rad dann eine entsprechend angepasste Ausrichtung einnehmen, damit auch in der entgegengesetzten Arbeitsrichtung eine präzise Bodenbearbeitung erfolgen kann.

Ein Aufsattelpflug ist beispielsweise aus der EP 0 986 943 A1 bekannt. Der Pflug umfasst neben einer Mehrzahl an Pflugkörpern, welche an einem mehrteiligen Pflugrahmen angeordnet sind, ein Fahrgestell mit einem Rad. Das Rad ist durch einen hydraulischen Aktuator lenkbar, wobei der hydraulische Aktuator in einen mechanischen Anschlag eingreift, um die Position des Rades parallel zur Antriebsrichtung während des Transports der Maschine festzulegen. Derartige hydraulische Systeme sind aufwändig ausgelegt und weisen üblicherweise eine Reihe von Hydraulikzylindern zur Lenkung auf, wodurch das Gewicht des Pfluges erhöht wird. Zudem ist für eine präzise Bodenbearbeitung häufig eine kontinuierliche Steuerung des Rades erforderlich.

Es ist daher die Aufgabe der vorliegenden Erfindung einen Aufsatteldrehpflug bereitzustellen, welcher verbesserte Nachlaufeigenschaften und eine verbesserte Handhabbarkeit aufweist und zudem kostengünstig und gewichtssparend ausgestaltet ist.

Die Aufgabe wird gelöst durch einen Aufsatteldrehpflug gemäß den Merkmalen des Anspruches 1. Vorteilhafte Ausgestaltungen der Erfindung sind in den Unteransprüchen angegeben.

Die Erfindung betrifft einen Aufsatteldrehpflug mit einer Zugeinrichtung zur lenkbaren Verbindung mit einer Zugmaschine, einem mehrere Pflugkörper tragenden Pflugrahmen, einer Drehvorrichtung zum Drehen des Pflugrahmens um mindestens eine, insbesondere radseitige, Drehachse aus einer Arbeitsstellung in eine andere Arbeitsstellung sowie in eine Transportstellung, wobei die Drehvorrichtung mit der Zugeinrichtung und dem Pflugrahmen verbunden ist, einem mit der Zugeinrichtung verbundenen Stabilisator, welcher sich im Wesentlichen entlang des Pflugrahmens erstreckt, mindestens einem Rad, welches in einem der Zugeinrichtung abgewandten Bereich, insbesondere einem Endbereich, des Stabilisators angeordnet ist, wobei das Rad zumindest über ein Schwenklager mit dem Stabilisator verbunden und um eine erste Lenkachse schwenkbar ist, wobei ein Verschwenken des Rades um die erste Lenkachse in Abhängigkeit einer Drehung des Pflugrahmens um die Drehachse erfolgt. Erfindungsgemäß ist eine zweite Lenkachse, insbesondere in einem der Zugeinrichtung abgewandten Bereich des Stabilisators und/oder in Arbeitsrichtung hinter der ersten Lenkachse, vorgesehen, wobei das Rad um die erste Lenkachse und/oder die zweite Lenkachse schwenkbar ist.

Ein Verschwenken des Rades um die erste Lenkachse und/oder einen ersten Lenkwinkel kann durch einen, insbesondere rein oder zumindest teilweise, mechanischen Zusammenhang mit der Position der Drehvorrichtung und/oder einem Drehwinkel um die Drehachse erfolgen. Die, insbesondere erste, Drehachse kann radseitig angeordnet sein. Eine weitere, insbesondere zweite, Drehachse kann drehrichtungsseitig angeordnet sein. Für ein Drehen des Pflugrahmens kann dieser mittels eines Radarmes und eines Tragarmes mit dem Schwenklager gelenkig verbunden sein, wobei der Radarm und der Tragarm über die, insbesondere erste, Drehachse miteinander verbunden sein können. Der Tragarm kann um eine Tragachse schwenkbar mit dem Schwenklager verbunden sein. Die Drehachse kann im Wesentlichen parallel zu einer Längserstreckung des Schwenklagers angeordnet sein, wohingegen die Tragachse im Wesentlichen rechtwinkelig zur Drehachse im Schwenklager angeordnet sein kann. Die Drehachse kann im Wesentlichen parallel zu der Arbeitsrichtung angeordnet sein. Die Arbeitsrichtung kann einer Zugrichtung des Aufsatteldrehpfluges entsprechen. Eine Ausrichtung bzw. Laufrichtung des Rades kann auch im Wesentlichen der Arbeitsrichtung entsprechen. Ein Rad im Sinne der Erfindung kann in Form eines einzelnen Rades, eines Zwillingsrades, mehrerer mittels einer Achse verbundener Räder und/oder in Form eines Raupenlaufwerks ausgebildet sein.

Ein erster Lenkwinkel kann somit in Abhängigkeit eines Drehwinkels des Pflugrahmens bzw. der Drehvorrichtung des Pflugrahmens einstellbar sein. Hierdurch kann bei einem Drehvorgang des Pfluges das Rad konstruktionsbedingt bereits eine Schwenkbewegung ausführen, wodurch ein Nachlaufverhalten des Pfluges, insbesondere in einer Arbeitsstellung und/oder einer Transportstellung, nur über die Drehvorrichtung und ohne zusätzliche Hydraulikkomponenten beeinflusst werden kann. Dies kann beispielsweise im Vorgewende oder beim Rangieren zum Lenken des Pfluges mit Hilfe der Drehvorrichtung genutzt werden. Ein Verschwenken des Rades um die, insbesondere erste und/oder zweite, Lenkachse in Abhängigkeit des Drehwinkels kann neben einer mechanischen Koppelung auch elektro-hydraulisch erfolgen, wobei ein Sensor, beispielsweise ein Drehwinkelsensor, an mindestens einer Drehachse angeordnet sein kann.

Ein Verschwenken des Rades um die, insbesondere steuerbare, zweite Lenkachse und/oder zweiten Lenkwinkel kann unabhängig von einem Verschwenken um die erste Lenkachse und/oder von einem ersten Lenkwinkel erfolgen. Durch Verschwenken um die zweite Lenkachse kann, insbesondere in einer rechts oder links wendenden Arbeitsstellung oder in einer mittleren Transportstellung, das Rad eine zusätzliche Lenkfunktion ausüben und eine zweite, insbesondere unabhängige und/oder zusätzliche, Lenkwinkeländerung des Rades relativ zum Pflugrahmen und/oder Stabilisator erzeugen. Hierbei kann der zweite Lenkwinkel in dieselbe oder in eine entgegengesetzte Richtung des ersten Lenkwinkels ausgerichtet sein.

Die zweite Lenkachse ermöglicht eine zusätzliche Lenkung des Rades, welche je nach Bedarf eingesetzt werden kann. Die hat den Vorteil, dass ein besseres Nachlaufverhalten, besonderes für Aufsatteldrehpflüge mit großen Abmessungen, erreicht werden kann. Zudem kann bei einer Drehung des Pfluges, beispielsweise in einem Vorgewende, ein Wenderadius des Aufsattelpfluges durch eine Erhöhung des gesamten Lenkwinkels ermöglicht werden. Darüber hinaus bietet die unabhängig von der ersten Lenkachse steuerbare zweite Lenkachse den Vorteil, dass eine Handhabbarkeit des Aufsatteldrehpfluges, beispielsweise bei einem Straßentransport oder beim Rangieren, verbessert werden kann. Aufgrund der Koppelung der ersten Lenkachse an die Drehvorrichtung und eine einfache Ausgestaltung der zweiten Lenkachse kann diese mit wenigen zusätzlichen Hydraulikkomponenten lenkbar ausgestaltet sein und so eine kostengünstige und gewichtssparende Lenkung des Rades um zumindest die zweite Lenkachse ermöglicht werden.

**In** einer bevorzugten Ausgestaltung ist die erste Lenkachse in dem Schwenklager und die zweite Lenkachse in dem Schwenklager, einem Zwischenelement und/oder einem das mindestens eine Rad tragenden Radträger angeordnet, wobei insbesondere die erste und zweite Lenkachse in einer gemeinsamen, im Wesentlichen senkrechten, Ebene angeordnet sind. Das Schwenklager kann um die erste Lenkachse schwenkbar mit dem Stabilisator verbunden sein und an einem der ersten Lenkachse gegenüberliegenden Ende kann die zweite Lenkachse in dem Schwenklager angeordnet sein. Das Zwischenelement kann um die zweite Lenkachse verschwenkbar mit dem Schwenklager auf der einen und auf seiner anderen Seite mit dem Radträger verbunden sein. In dem Zwischenelement kann radträgerseitig eine Hubachse zur schwenkbaren Verbindung mit dem Radträger angeordnet sein. Das Zwischenelement kann dabei in Form eines Kreuzgelenkes, insbesondere mit zweiter Lenkachse und/oder Hubachse, ausgebildet sein. Das Zwischenelement bietet hierbei eine Möglichkeit, die zweite Lenkachse in einem bestehenden Aufsatteldrehpflug mit geringem Aufwand nachzurüsten. Die alternativ in dem Radträger angeordnete zweite Lenkachse kann in Arbeitsrichtung gesehen hinter der Hubachse angeordnet sein. Der Radträger kann hierfür unmittelbar mit dem Schwenklager über die Hubachse verbunden sein. Die Hubachse kann dabei an einem der ersten Lenkachse gegenüberliegenden Ende des Schwenklagers angeordnet sein. Durch die Anordnung der zweiten Lenkachse in dem Radträger kann eine kürzere Bauform und eine bessere Übertragung der auf das Rad wirkenden Kräfte in den Pflugrahmen ermöglicht werden. Die erste und zweite Lenkachse können in einer gemeinsamen, im Wesentlichen senkrechten, Ebene angeordnet sein. Hierdurch ist symmetrischer Aufbau gegeben, so dass in beiden Arbeitsstellungen eine gleiche Ausrichtung des Pflugrahmens möglich ist.

In einer besonders bevorzugten Ausgestaltung weist der Radträger mindestens eine Hubvorrichtung und eine Radaufnahme auf, wobei der Radträger um eine Hubachse verschwenkbar an dem Schwenklager und/oder dem Zwischenelement angeordnet ist. Die Radaufnahme und die Hubvorrichtung des Radträgers können starr oder gelenkig miteinander verbunden sein. Eine gelenkig mit der Hubvorrichtung verbundene Radaufnahme kann um die zweite Lenkachse verschwenkbar mit der Hubvorrichtung verbunden sein. Die zweite Lenkachse kann dabei in der Hubvorrichtung des Radträgers angeordnet sein. Dies bietet den Vorteil einer in Arbeitsrichtung gesehen kurzen Bauweise. Die Radaufnahme kann zur Lagerung mindestens eines Rades ausgebildet sein.

Bevorzugt ist das mindestens eine Rad in Arbeitsrichtung in einem hinteren Bereich, insbesondere einem hinteren Drittel, des Pflugrahmens und/oder hinter dem letzten Pflugkörper angeordnet. Dies bietet den Vorteil einer günstigen Aufnahme des Gewichtes des Pfluges durch das Rad und gleichzeitig eine zuverlässige Steuerung des Pfluges in einer Arbeitsstellung.

In einer besonders bevorzugten Ausgestaltung sind die erste Lenkachse und/oder die zweite Lenkachse, insbesondere in der Arbeitsstellung und/oder der Transportstellung, unparallel, und insbesondere gegenüber einer Senkrechten geneigt, ausgerichtet. Durch eine schräg bzw. gegenüber einer Senkrechten geneigten, insbesondere ersten, Lenkachse kann das Rad in der Arbeitsstellung parallel zur Anlage der Pflugkörper ausgerichtet sein. Zudem können zumindest in der Arbeitsstellung und der Transportstellung die erste und zweite Lenkachse unparallel ausgerichtet sein. Hierdurch kann eine stabilere Ausgestaltung des Aufsatteldrehpfluges und insbesondere der Lenkwinkel erreicht werden, welche unempfindlicher gegen eine Veränderung der Lenkwinkel aufgrund seitlich wirkender Kräfte sind.

In einer weiter bevorzugten Ausgestaltung ist stabilisatorseitig, schwenklagerseitig und/oder radträgerseitig mindestens ein Lenkaktuator zum Verschwenken des Rades um die zweite Lenkachse vorgesehen. Der mindestens eine Lenkaktuator kann dabei jeweils mit dem Stabilisator, dem Schwenklager und/oder dem Radträger verbunden sein, um eine Schwenkbewegung um die erste und/oder zweite Lenkachse bewirken zu können. Ein radträgerseitig angeordneter Lenkaktuator kann dabei an der Hubvorrichtung und/oder der Radaufnahme des Radträgers verbunden sein, um eine Schwenkbewegung um eine, insbesondere hubvorrichtungsseitig angeordnete, zweite Lenkachse zu ermöglichen. Ein Lenkaktuator kann hydraulisch, pneumatisch und/oder elektrisch betätigbar ausgestaltet sein, und beispielsweise in Form eines einfachwirkenden oder doppeltwirkenden Zylinders oder einer elektrisch betätigbaren Spindel ausgebildet sein. Der Aufsatteldrehpflug kann ein Hydrauliksystem mit, insbesondere genau oder mindestens, einem Hydraulikkreis zum Drehen des Pflugrahmens mittels der Drehvorrichtung und/oder einer Steuereinheit aufweisen. Der mindestens eine Lenkaktuator kann mit, insbesondere genau, einem Hydraulikkreis des Hydrauliksystem, insbesondere der Drehvorrichtung, verbunden und beispielsweise über die Steuereinheit ansteuerbar sein. Hierbei kann das Hydrauliksystem derart ausgestaltet sein, dass der mindestens eine Lenkaktuator drucklos geschaltet werden kann, wodurch das Rad sich um die zweite Lenkachse selbststätig in Arbeitsrichtung ausrichten kann. Bei zwei entgegengesetzt wirkenden Lenkaktuatoren, beispielsweise in Form von einfachwirkenden Zylindern, können die beiden Lenkaktuatoren derart miteinander verbunden werden, dass sich das Rad um die zweite Lenkachse selbsttätig ausrichten kann. Zudem kann das Hydrauliksystem derart ausgebildet sein, das der Lenkaktuator und mindestens ein, insbesondere sperrbarer, Drehaktuator der Drehvorrichtung mit demselben Hydraulikkreis verbunden sind. Hierdurch kann bei, insbesondere durch die Steuereinheit, gesperrtem Drehaktuator eine Steuerung ausschließlich des Rades um die zweite Lenkachse durch die Steuereinheit erfolgen. Die Ausgestaltung und Integration des Lenkaktuators ermöglicht eine kostengünstig und gewichtssparende Ausgestaltung des Hydrauliksystems und des Aufsatteldrehpfluges.

Bevorzugt ist ein maximaler zweiter Lenkwinkel um die zweite Lenkachse größer als ein maximaler erster Lenkwinkel um die erste Lenkachse. Der erste Lenkwinkel kann beispielsweise maximal 5°, vorzugsweise 10°, besonders bevorzugt 15° zu beiden Seiten des Stabilisators betragen. Der zweite Lenkwinkel kann beispielsweise maximal 10°, bevorzugt 15°, besonders bevorzugt 20° zu beiden Seiten des Zwischenelementes und/oder Radträgers, insbesondere der Hubvorrichtung, betragen. Dadurch, dass der maximale zweite Lenkwinkel größer als der maximale erste Lenkwinkel sein kann, kann eine Lenkbewegung um den ersten Lenkwinkel zumindest teilweise durch eine Lenkbewegung um den zweiten Lenkwinkel kompensiert oder übersteuert werden.

In einer besonders bevorzugten Ausgestaltung ist eine, insbesondere hydraulische oder elektro-hydraulische, Steuereinheit zur Steuerung der Drehvorrichtung, des mindestens einen Lenkaktuators und/oder eines Hubaktuators vorgesehen. Ein Hubaktuator kann an zumindest einem Ende mit dem Radträger, insbesondere der Hubvorrichtung des Radträgers, verbunden sein, und eine im Wesentlichen vertikale Verlagerung des Rades bewirken. An einem anderen Ende kann der Hubaktuator zwischenlagerseitig und/oder an dem Zwischenelement gelagert sein. Die Steuereinheit kann, insbesondere genau, einen oder mehrere Hydraulikkreise aufweisen. Der mindestens eine Lenkaktuator kann mit einem oder mit dem Hydraulikkreis zur Steuerung der Drehvorrichtung mit mindestens einem Drehaktuator verbunden sein, wobei insbesondere mindestens ein Sperrventil zum Absperren eines Drehaktuators vorgesehen sein kann. Dies ermöglicht bei abgesperrtem Drehaktuator eine Steuerung des Lenkaktuators über denselben Hydraulikkreis.

Vorzugsweise ist die Steuereinheit derart ausgestaltet, dass der mindestens eine Lenkaktuator der zweiten Lenkachse in Abhängigkeit einer Drehung des Pflugrahmens durch die Drehvorrichtung steuerbar. Hierbei kann bei einer Drehung des Pflugrahmens, beispielsweise in einem Vorgewende, über die zweite Lenkachse eine Vergrößerung des gesamten Lenkwinkels, also erster und zweiter Lenkwinkel addiert, und damit ein kleinerer Wenderadius des Aufsatteldrehpfluges ermöglicht werden. Der Drehwinkel kann dabei beispielsweise mittels eines Sensors, wie einem Drehwinkelsensor, ermittelt und der Steuereinheit zur Steuerung des zweiten Lenkwinkels übermittelt werden. In der Transportstellung, wenn der Pflugrahmen im Wesentlichen senkrecht über den Stabilisator angehoben und in einer senkrechten Position ist, kann beispielsweise ein Absperren der Drehvorrichtung bzw. des Drehaktuators erfolgen, wobei eine Lenkung über die zweiten Lenkachse weiterhin möglich sein kann. Die erste Lenkachse kann aufgrund der Koppelung und der Position des Pflugrahmens und der abgesperrten Drehvorrichtung in einer mittigen Stellung im Wesentlichen mit einem Lenkwinkel gleich null angeordnet sein. Die zweite Lenkachse kann in der Transportposition, also mit senkrecht verschwenktem Pflugrahmen, ebenfalls gesperrt sein. Beim Einleiten der Drehbewegung, beispielsweise aus einer Arbeitsstellung heraus, kann zunächst Druck im Hydrauliksystem aufgebaut werden, wobei neben dem Drehaktuator ebenfalls der Lenkaktuator mit diesem Druck beaufschlagt werden kann, wodurch der Lenkaktuator das Rad beim Einleiten des Drehens in einen maximalen Lenkwinkel um die zweite Lenkachse verbringen kann. Dies hat den Vorteil, dass beim Drehen des Pfluges im Vorgewende unmittelbar mit Beginn der Drehbewegung eine maximale Lenkbewegung um die zweite Lenkachse erfolgen kann, wodurch der Wenderadius des Aufsatteldrehpfluges verringert werden kann.

In einer bevorzugten Ausgestaltung ist dem mindestens einen Lenkaktuator eine Ventileinheit zugeordnet, welche derart ausgestaltet und angeordnet ist, dass der mindestens eine Lenkaktuator in eine Schwimmstellung verbringbar ist. Die Ventileinheit kann derart ausgestaltet sein, dass mindestens ein Lenkaktuator in eine Schwimmstellung verbracht werden kann, beispielsweise durch fluidisches Verbinden der betreffenden Zylinderräume bei hydraulischen oder pneumatischen Zylindern. Die Ventileinheit kann in die Steuereinheit integriert sein oder als von dieser getrenntes Bauteil ausgebildet sein. Die Ventileinheit kann durch die Steuereinheit schaltbar sein. Eine Schwimmstellung der Drehvorrichtung und/oder der Lenkaktuatoren kann bereits kurz vor Erreichen der zu erreichenden Arbeitsstellung geschaltet werden. Hierdurch kann der Pflugrahmen den restlichen Weg bis in die Arbeitsstellung durch die Schwerkraft abgesenkt und das Rad sich bereits selbststätig in Arbeitsrichtung ausrichten. Ein selbsttätiges Ausrichten des Rades, insbesondere in Schwimmstellung des Lenkaktuators, kann durch eine gegenüber einer Senkrechten, insbesondere nach vorne, geneigten zweiten Lenkachse bewirkt werden.

Weitere Einzelheiten der Erfindung sind den Figuren und der Figurenbeschreibung zu entnehmen, die eine bevorzugte Ausführung der Erfindung zeigen.

Es zeigen:
- Fig 1:: eine Draufsicht eines Aufsatteldrehpfluges in einer Arbeitsstellung;
- Fig. 2:: eine seitliche Detaildarstellung eines Zwischenlagers des Aufsatteldrehpfluges aus Figur 1;
- Fig. 3:: eine Darstellung des Aufsatteldrehpfluges aus Fig. 2 mit gerade stehender erster und zweiter Lenkachse;
- Fig. 4:: eine Darstellung des Aufsatteldrehpfluges aus Fig. 2 mit gerade stehender erster und ausgelenkter zweiter Lenkachse;
- Fig. 5:: eine Darstellung des Aufsatteldrehpfluges aus Fig. 2 in einer Arbeitsstellung mit ausgelenkter erster und zweiter Lenkachse; und
- Fig. 6:: eine seitliche Detaildarstellung eines Zwischenlagers in einer alternativen Ausgestaltung.

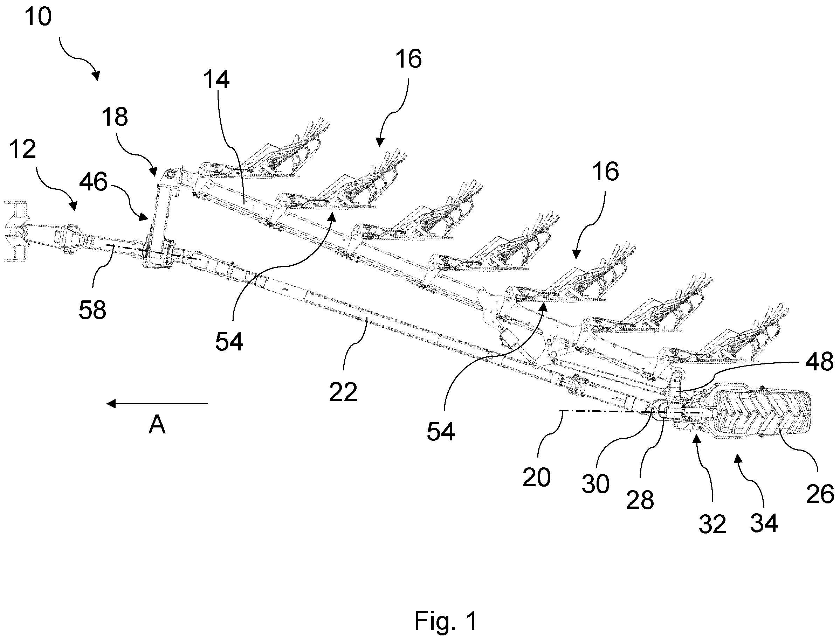

In Figur 1 ist ein Aufsatteldrehpflug 10 zur Bodenbearbeitung in einer Arbeitsstellung dargestellt, welcher eine Zugeinrichtung 12 zur Koppelung mit einem Zugfahrzeug (nicht dargestellt) aufweist. An einem Pflugrahmen 14 des Aufsatteldrehpfluges 10 sind eine Mehrzahl an Pflugkörpern 16 angeordnet, welche jeweils pflugrahmenseitig eine Anlage 54 aufweisen, welche in einer Arbeitsstellung im Wesentlichen entlang einer Arbeitsrichtung A ausgerichtet sind. Der Pflugrahmen 14 ist über eine Drehvorrichtung 18 mit der Zugeinrichtung 12 verbunden und mittels mindestens eines Drehaktuators 46 um eine Drehachse 58 drehbar gelagert. Eine Drehung des Pflugrahmens 14 kann dabei beispielsweise in einem Vorgewende erfolgen, wenn die Arbeitsrichtung A beim Pflügen wechselt. Hierbei wird der Pflugrahmen 14 mit einer im Bodeneingriff befindlichen ersten Reihen von Pflugkörpern 16 aus einer Arbeitsstellung angehoben und über eine senkrechte, im Wesentlichen vertikale, Position in die gegenüberliegende Arbeitsposition gedreht, so dass eine zweite Reihe von Pflugkörper 16 in Bodeneingriff gebracht wird. Die senkrechte Position des Pflugrahmens 14 entspricht dabei einer Transportstellung des Aufsatteldrehpfluges 10, beispielsweise für einen Straßentransport.

An der Zugeinrichtung 12 ist ebenfalls ein Stabilisator 22 angeordnet, welcher sich im Wesentlichen entlang des Pflugrahmens 14 erstreckt. In einem der Zugeinrichtung 12 abgewandten Bereich des Stabilisators 22, insbesondere an einem in Arbeitsrichtung gesehenen hinteren Ende des Stabilisators 22, ist schwenkbar ein Radträger 34 mit einem Rad 26 angeordnet. Das Rad 26 bzw. der Radträger 34 ist dabei in einem in Arbeitsrichtung A gesehenen hinteren Drittel des Pflugrahmens 14 oder hinter dem letzten Pflugkörper 16 angeordnet. Hierbei kann eine Lagerung des Rades 26 bzw. des Radträgers 34 an dem Pflugrahmen 14, dem Schwenklanger 28, dem Zwischenelement 50 und/oder dem Stabilisator 22 hinter einer Lagerung des letzten Pflugkörpers 16 an dem Pflugrahmen 14 in Arbeitsrichtung A gesehen angeordnet sein. Der Radträger 34 ist zumindest über ein Schwenklager 28 mit dem Stabilisator 22 verbunden, wobei das Schwenklager um eine erste Lenkachse 30 verschwenkbar ist. Über einen Radarm 48 ist der Pflugrahmen 14 um eine Drehachse 20 drehbar mit dem Schwenklager 28 verbunden. Über die Koppelung des Pflugrahmens 14 mit dem Schwenklager 28 erfolgt bei einer Drehung des Pflugrahmens 14 eine Schwenkbewegung des Schwenklagers 28 um die erste Lenkachse 30.

Erfindungsgemäß ist zusätzlich zur ersten Lenkachse 30 eine zweite Lenkachse 32 zum Verschwenken des Rades 26 vorgesehen. Die zweite Lenkachse 32 ist hierbei in Arbeitsrichtung A gesehen hinter der ersten Lenkachse 30 angeordnet.

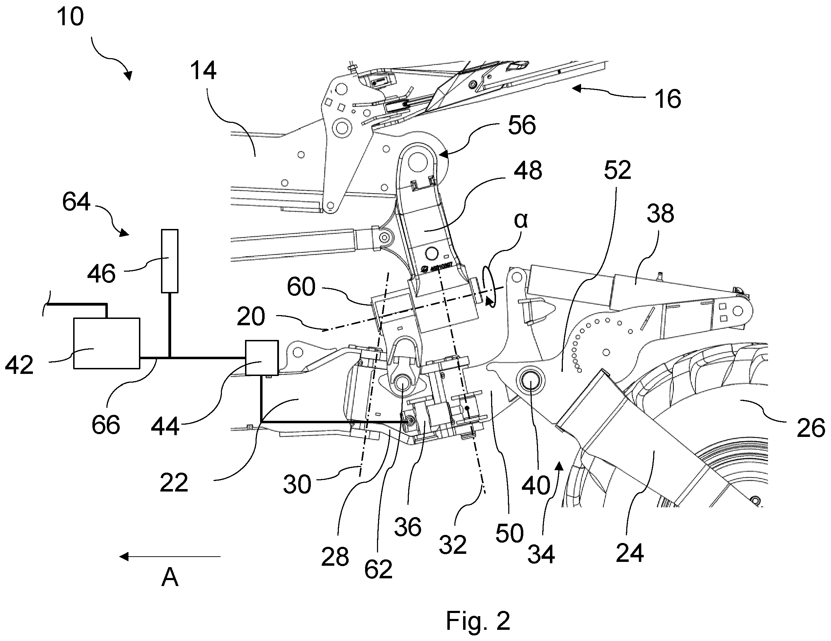

In Figur 2 ist das Schwenklager 28 des Aufsatteldrehpfluges 10 aus Figur 1 im Detail dargestellt, wobei der Pflugrahmen 14 in einer im Wesentlichen vertikalen Transportposition dargestellt ist. Das Schwenklager 28 ist um die erste Lenkachse 30 schwenkbar mit dem Stabilisator 22 verbunden. Auf einer dem Stabilisator 22 abgewandten Ende des Schwenklagers 28 ist ein Zwischenelement 50 um die zweite Lenkachse 32 schwenkbar an dem Schwenklager 28 angeordnet. Die erste und zweite Lenkachse 30, 32 sind dabei in derselben, insbesondere im Wesentlichen senkrechten, Ebene angeordnet, wobei das Rad 26 um die erste Lenkachse 30 und/oder die zweite Lenkachse 32 verschwenkbar ist. Die erste und zweite Lenkachse 30, 32 sind dabei gegenüber einer Senkrechten, insbesondere in Arbeitsrichtung A, geneigt und/oder unparallel zueinander angeordnet.

In Arbeitsrichtung A gesehen ist endseitig an dem Zwischenelementes 50 der Radträger 34 um eine Hubachse 40 verschwenkbar angeordnet. Die Hubachse 40 ist im Wesentlichen rechtwinkelig und/oder waagerecht zur ersten und/oder zweiten Lenkachse 30, 32 angeordnet, wodurch der Radträger 34 in einer vertikalen Ebene verschwenkbar ist. Das Zwischenelement 50 ist daher in Form eines Kreuzgelenkes ausgebildet. Zur Verlagerung des Rades 26 bzw. des Radträgers 34 ist ein Hubaktuator 38 in Form beispielsweise eines Hydraulikzylinders vorgesehen. Der Radträger 34 weist zur Aufnahme des Hubaktuators 38 eine Hubvorrichtung 52 und zur Lagerung des Rades 26 eine Radaufnahme 24 auf, wobei die Radaufnahme 24 und die Hubvorrichtung 52 starr oder flexibel, insbesondere horizontal schwenkbar, miteinander verbunden sind.

Das Schwenklager 28 ist über eine Tragachse 62, welche im Wesentlichen waagerecht und/oder rechtwinkelig zur ersten und/oder zweiten Lenkachse 30, 32 angeordnet ist, gelenkig mit einem Tragarm 60 verbunden. An dem Tragarm 60 ist um die Drehachse 20 drehbar der Radarm 48 angeordnet, welcher über eine Lagerstelle 56 an einem dem Schwenklager 28 abgewandten Ende mit dem Pflugrahmen 14 gelenkig verbunden ist. Über diese Koppelung erfolgt bei einer Drehbewegung des Pflugrahmens 14 um die Drehachse 20 eine Schwenkbewegung des Schwenklagers 28 um die erste Lenkachse 30, wodurch das Rad 26 ebenfalls um die erste Lenkachse 30 verschwenkbar ist. Bei einer Drehung des Pflugrahmens 14 um die schwenklagerseitige Drehachse 20, insbesondere um einen Drehwinkel α, erfolgt ebenfalls eine Drehung des Pflugrahmens 14 um die zugeinrichtungsseitige Drehachse 58. Ein Schwenken des Rades 26 um die erste Lenkachse 30 erfolgt somit in Abhängigkeit einer Drehbewegung, und insbesondere eines Drehwinkels α, um mindestens eine der Drehachsen 20, 58. Die Drehachsen 20, 58 können in einer Arbeitsstellung und/oder Transportstellung parallel oder unterschiedlich ausgerichtet sein.

Zum Verschwenken der Rades 26 um die zweite Lenkachse 32 ist mindestens ein Lenkaktuator 36 vorgesehen, welcher jeweils an dem Schwenklager 28 und dem Zwischenelement 50 angeordnet ist und durch eine Längenänderung eine Schwenkbewegung um die zweite Lenkachse 32 bewirken kann. Der Lenkaktuator 36 ist als Hydraulikzylinder ausgebildet. Hierbei können beispielsweise ein einzelner Lenkaktuator 36 in Form eines doppeltwirkenden Zylinders oder zwei einfachwirkende Zylinder vorgesehen sein, welche entgegengesetzt wirken. Das dargestellte Ausführungsbeispiel weist zwei einfachwirkende Hydraulikzylinder als Lenkaktuatoren 36 auf, welche beiderseits des Schwenklagers 28 bzw. des Zwischenelementes 50 angeordnet sind.

Der mindestens eine Lenkaktuator 36 ist mit einem Hydrauliksystem 64 des Aufsatteldrehpfluges 10 verbunden und kann durch dieses mit Druck beaufschlagt und durch eine Steuereinheit 42 gesteuert werden. Über eine Ventileinheit 44 kann der mindestens eine Lenkaktuator 36 in eine Schwimmstellung verbracht und/oder gesperrt werden, wodurch beispielsweise in einer Arbeitsstellung ein selbststätiges Ausrichten des Rades 26 an der Arbeitsrichtung A und in der Transportstellung eine festgelegte, insbesondere mittige, Ausrichtung des Rades 26 bewirkt werden kann. Die Ventileinheit 44 ist manuell und/oder durch die Steuereinheit 42 steuerbar und kann in die Steuereinheit 42 integriert oder als getrenntes Bauteil ausgebildet sein. Mit dem Hydrauliksystem 64 ist ebenfalls der mindestens eine Drehaktuator 46 der Drehvorrichtung 18 verbunden. Hierbei sind der mindestens eine Drehaktuator 46 und der mindestens eine Lenkaktuator 36 mit demselben Hydraulikkreis 66 verbunden. Hierdurch kann bei einer Druckbeaufschlagung des Hydraulikkreises 66 zur Einleitung einer Drehung des Pflugrahmens 14 eine Schwenkbewegung des Rades um die zweite Lenkachse 32 bewirkt werden. Die Schwenkbewegung um die zweite Lenkachse 32 wird dabei mit einer durch das Drehen des Pflugrahmens 14 bewirkten Schwenkbewegung des Rades 26 um die erste Lenkachse 30 überlagert. Der Hubaktuator 38 kann mit einem separaten oder demselben Hydraulikkreis 66 wie ein Lenkaktuator 36 und/oder ein Drehaktuator 46 verbunden sein.

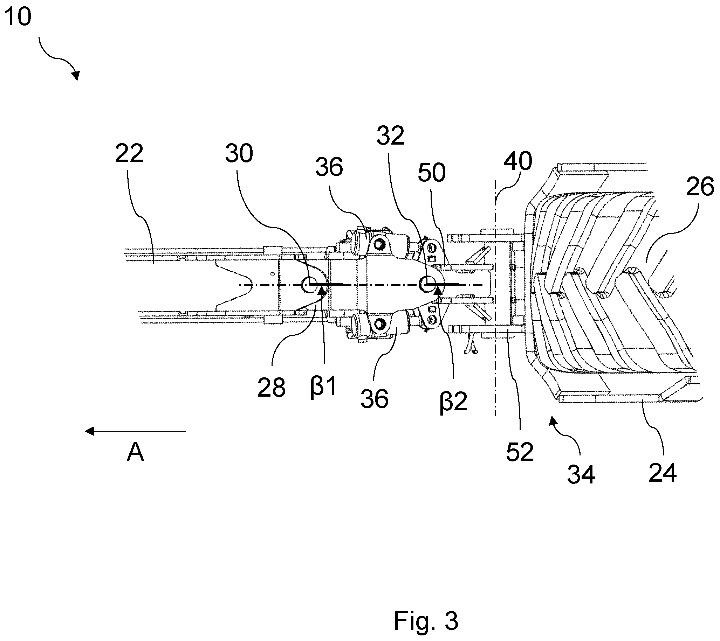

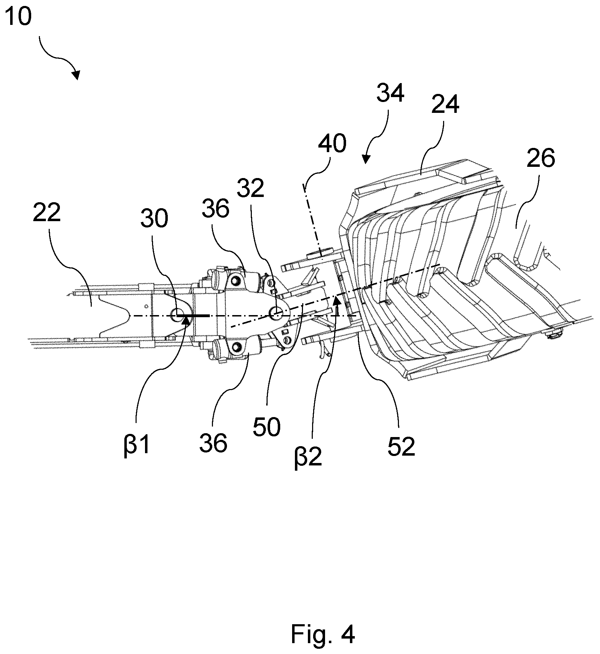

In Figur 3 ist das Schwenklager 28 aus Figur 2 in einer Ansicht von unten dargestellt. Der Aufsatteldrehpflug 10 ist in Transportstellung, wobei das Schwenklager 28 und das Zwischenelement 50 unverschwenkt in einer im Wesentlichen mittigen Ausrichtung angeordnet sind. Ein erster Lenkwinkel β1 um die erste Lenkachse 30 und ein zweiter Lenkwinkel β2 um die zweite Lenkachse 32 sind im Wesentlichen null. Die Lenkaktuatoren 36 können dabei gesperrt oder in eine Schwimmstellung geschaltet sein. In Figur 4 ist, ebenfalls in einer Ansicht von unten, ein um die zweite Lenkachse 32 ausgelenktes Rad 26 dargestellt. Das Rad 26 bzw. der Radträger 34 und das Zwischenelement 50 sind durch die Lenkaktuatoren 36 um einen zweiten Lenkwinkel β2 um die zweite Lenkachse 32 verschwenkt. Das Schwenklager 28 ist weiterhin in einer unverschwenkten Stellung dargestellt. Dies kann beispielsweise in der Transportstellung erfolgen, wenn das Rad 26 zur Verbesserung des Nachlaufverhaltens verschwenkt wird. Zudem kann diese Ausrichtung des Schwenklagers 28 und des Zwischenelementes 50 beim Drehen des Pfluges 10, beispielsweise im Vorgewende, auftreten, wenn beim Wechsel der Arbeitsstellung der Pflugrahmen 14 die vertikale Transportstellung durchfährt, das Schwenklager 28 entsprechend mittig ausgerichtet ist, und aufgrund des zum Drehen mit Druck beaufschlagten Hydraulikkreises 66 die Lenkaktuatoren 36 ausgelenkt sind, so dass das Rad 26 verschwenkt ist, um beispielsweise das Wenden im Vorgewende zu unterstützen.

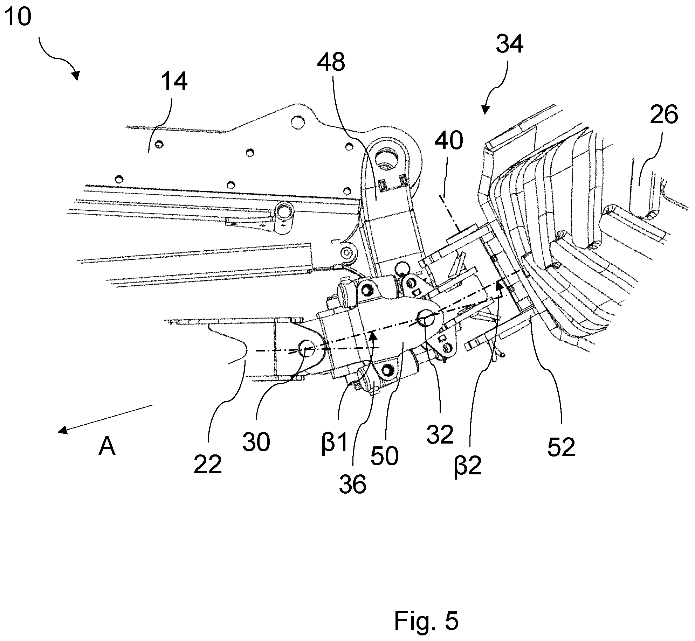

**In** der in Figur 5 dargestellten Ausrichtung des Schwenklagers 28 ist der Aufsatteldrehpflug 10 in einer Arbeitsstellung mit abgesenktem Pflugrahmen 14. Durch das Absenken des Pflugrahmens 14 in die Arbeitsstellung ist das Schwenklager 28 um den ersten Lenkwinkel β1 um die erste Lenkachse 30 verschwenkt. Zusätzlich, beispielsweise aufgrund des noch im Hydraulikkreis 66 wirkenden Druckes, ist das Zwischenelement 50 und damit der Radträger 34 mit dem Rad 26 um den zweiten Lenkwinkel β2 um die zweite Lenkachse 32 verschwenkt. Der zweite Lenkwinkel β2 ist dabei größer als der erste Lenkwinkel β1. In der Arbeitsstellung kann, beispielsweise durch die Steuereinheit 42, der Drehaktuator (nicht dargestellt) und der mindestens eine Lenkaktuator 36 in eine Schwimmstellung geschaltet werden. Hierdurch kann der Pflugrahmen 14 durch die Schwerkraft in Richtung Boden verbracht werden und das Rad 26 kann sich selbststätig in die Arbeitsrichtung A ausrichten.

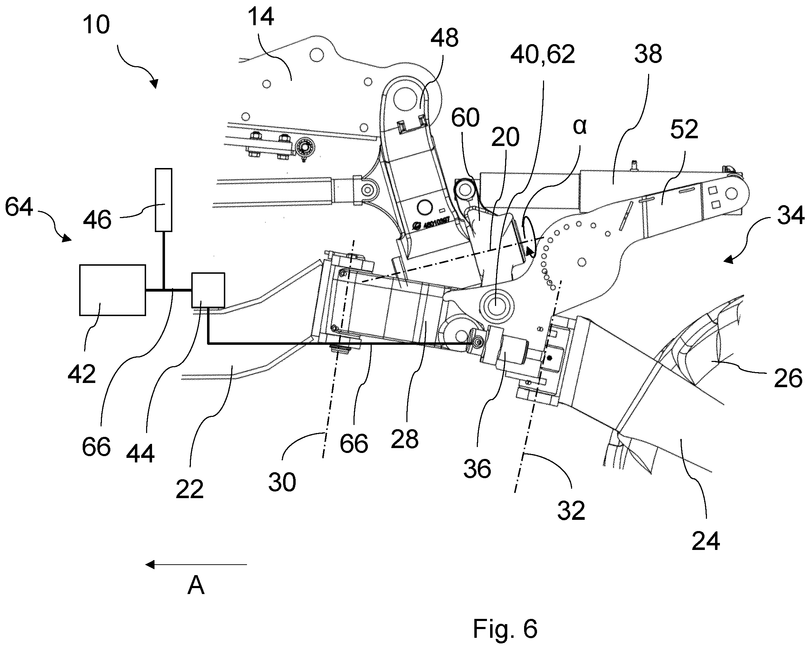

Figur 6 zeigt eine abgewandelte Ausführungsform eines Aufsatteldrehpfluges 10. Hierbei ist das Schwenklager 28 mit dem Stabilisator 22 um die erste Lenkachse 30 schwenkbar verbunden. Auf der dem Stabilisator 22 gegenüberliegenden Seite ist das Schwenklager 28 mit dem Radträger 34, insbesondere der Hubvorrichtung 52, um die Hubachse 40 vertikal schwenkbar verbunden. An der Hubvorrichtung 52 ist in Arbeitsrichtung A gesehen endseitig die Radaufnahme 24 mit dem Rad 26 um die zweite Lenkachse 32 schwenkbar angeordnet. Die zweite Lenkachse 32 ist somit in dem Radträger 34, insbesondere der Hubvorrichtung 52 und/oder der Radaufnahme 24, angeordnet. Die erste und zweite Lenkachse 30, 32 sind in der dargestellten Arbeitsstellung in derselben Ebene und unparallel, in einem Winkel zueinander, angeordnet. Der mindestens eine Lenkaktuator 36 ist an dem Radträger 34 angeordnet und mit der Hubvorrichtung 52 und der Radaufnahme 24 verbunden. Schwenklagerseitig sind dabei die Hubachse 40 und die Tragachse 62 des Tragarms 60 koaxial angeordnet. Denkbar ist auch eine getrennte, und insbesondere parallele, Anordnung der Hubachse 40 und der Tragachse 62 in dem Schwenklager 28. Mit dem Tragarm 60 ist über die Drehachse 20 der Tragarm 48 verbunden, an dem der Pflugrahmen 14 gelenkig angeordnet ist.

### Bezugszeichen

| | | | |
|---|---|---|---|
| 10 | Aufsatteldrehpflug | 54 | Anlage |
| 12 | Zugeinrichtung | 56 | Lagerstelle |
| 14 | Pflugrahmen | 58 | Drehachse |
| 16 | Pflugkörper | 60 | Tragarm |
| 18 | Drehvorrichtung | 62 | Tragachse |
| 20 | Drehachse | 64 | Hydrauliksystem |
| 22 | Stabilisator | 66 | Hydraulikkreis |
| 24 | Radaufnahme | | |
| 26 | Rad | | |
| 28 | Schwenklager | α | Drehwinkel |
| 30 | Erste Lenkachse | β1 | Erster Lenkwinkel |
| 32 | Zweite Lenkachse | β2 | Zweiter Lenkwinkel |
| 34 | Radträger | | |
| 36 | Lenkaktuator | | |
| 38 | Hubaktuator | A | Arbeitsrichtung |
| 40 | Hubachse | | |
| 42 | Steuereinheit | | |
| 44 | Ventileinheit | | |
| 46 | Drehaktuator | | |
| 48 | Radarm | | |
| 50 | Zwischenelement | | |
| 52 | Hubvorrichtung | | |

## Patentansprüche

1. Aufsatteldrehpflug mit einer Zugeinrichtung (12) zur lenkbaren Verbindung mit einer Zugmaschine, einem mehrere Pflugkörper (16) tragenden Pflugrahmen (14), einer Drehvorrichtung (18) zum Drehen des Pflugrahmens (14) um mindestens eine, insbesondere radseitige, Drehachse (20, 58) aus einer Arbeitsstellung in eine andere Arbeitsstellung sowie in eine Transportstellung, wobei die Drehvorrichtung (18) mit der Zugeinrichtung (12) und dem Pflugrahmen (14) verbunden ist, einem mit der Zugeinrichtung (12) verbundenen Stabilisator (22), welcher sich im Wesentlichen entlang des Pflugrahmens (14) erstreckt, mindestens einem Rad (26), welches in einem der Zugeinrichtung (12) abgewandten Bereich, insbesondere einem Endbereich, des Stabilisators (22) angeordnet ist, wobei das Rad (26) zumindest über ein Schwenklager (28) mit dem Stabilisator (22) verbunden und um eine erste Lenkachse (30) schwenkbar ist, wobei ein Verschwenken des Rades (26) um die erste Lenkachse (30) in Abhängigkeit einer Drehung des Pflugrahmens (14) um die Drehachse (20, 58) erfolgt, **dadurch gekennzeichnet, dass** eine zweite Lenkachse (32), insbesondere in einem der Zugeinrichtung (12) abgewandten Bereich des Stabilisators (22) und/oder in Arbeitsrichtung (A) hinter der ersten Lenkachse (30), vorgesehen ist, wobei das Rad (26) um die erste Lenkachse (30) und/oder die zweite Lenkachse (32) schwenkbar ist.

2. Aufsatteldrehpflug nach Anspruch 1, **dadurch gekennzeichnet, dass** die erste Lenkachse (30) in dem Schwenklager (28) und die zweite Lenkachse (32) in dem Schwenklager (28), einem Zwischenelement (50) und/oder einem das mindestens eine Rad (26) tragende Radträger (34) angeordnet ist, wobei insbesondere die erste und zweite Lenkachse (30, 32) in einer gemeinsamen, im Wesentlichen senkrechten, Ebene angeordnet sind.

3. Aufsatteldrehpflug nach Anspruch 1 oder 2, **dadurch gekennzeichnet, dass** der Radträger (34) mindestens eine Hubvorrichtung (52) und eine Radaufnahme (24) aufweist, wobei der Radträger (34) um eine Hubachse (40) verschwenkbar an dem Schwenklager (28) und/oder dem Zwischenelement (50) angeordnet ist.

4. Aufsatteldrehpflug nach einem der vorherigen Ansprüche, **dadurch gekennzeichnet, dass** das mindestens eine Rad (26) in Arbeitsrichtung (A) in einem hinteren Bereich, insbesondere einem hinteren Drittel, des Pflugrahmens (14) und/oder hinter dem letzten Pflugkörper (16) angeordnet ist.

5. Aufsatteldrehpflug nach einem der vorherigen Ansprüche, **dadurch gekennzeichnet, dass** die erste Lenkachse (30) und/oder die zweite Lenkachse (32), insbesondere in der Arbeitsstellung und/oder der Transportstellung, unparallel, und insbesondere gegenüber einer Senkrechten geneigt, ausgerichtet sind.

6. Aufsatteldrehpflug nach einem der vorherigen Ansprüche, **dadurch gekennzeichnet, dass** stabilisatorseitig, schwenklagerseitig und/oder radträgerseitig mindestens ein Lenkaktuator (36) zum Verschwenken des Rades (26) um die zweite Lenkachse (32) vorgesehen ist.

7. Aufsatteldrehpflug nach einem der vorherigen Ansprüche, **dadurch gekennzeichnet, dass** ein maximaler zweiter Lenkwinkel (β2) um die zweite Lenkachse (32) größer ist als ein maximaler erster Lenkwinkel (β1) um die erste Lenkachse (30).

8. Aufsatteldrehpflug nach einem der vorherigen Ansprüche, **dadurch gekennzeichnet, dass** eine, insbesondere hydraulische oder elektro-hydraulische, Steuereinheit (42) zur Steuerung der Drehvorrichtung (18), des mindestens einen Lenkaktuators (36) und/oder eines Hubaktuators (38) vorgesehen ist.

9. Aufsatteldrehpflug nach einem der vorherigen Ansprüche, **dadurch gekennzeichnet, dass** die Steuereinheit (42) derart ausgestaltet ist, dass der mindestens eine Lenkaktuator (36) der zweiten Lenkachse (32) in Abhängigkeit einer Drehung des Pflugrahmens (14) durch die Drehvorrichtung (18) steuerbar ist.

10. Aufsatteldrehpflug nach einem der vorherigen Ansprüche, **dadurch gekennzeichnet, dass** dem mindestens einen Lenkaktuator (36) eine Ventileinheit (44) zugeordnet ist, welche derart ausgestaltet und angeordnet ist, dass der mindestens eine Lenkaktuator (36) in eine Schwimmstellung verbringbar ist.
